# FASCICULE DE BREVET EUROPEEN

(11) **EP 1 883 574 B1**
(45) Date de publication et mention de la délivrance du brevet: **03.12.2008**
(21) Numéro de dépôt: 06709411.0
(22) Date de dépôt: 19.01.2006
(51) Int. Cl.: B62L 3/00, B62K 25/10

(54) **TRAIN ARRIERE POUR BICYCLETTE**
HINTERGABEL FÜR EIN FAHRRAD
REAR FORK FOR BICYCLE

(30) Priorité: 19.01.2005 FR 0550155
(43) Date de publication de la demande: 06.02.2008
(73) Titulaire: Renault Sport Technologies, 91955 Les Ulis (FR)
(72) Inventeur: TRIBOTTE, Pascal, F-78000 Versailles (FR)
(74) Mandataire: Guyon, Rodolphe C.
(86) Numéro de dépôt international: PCT/FR2006/050025
(87) Numéro de publication internationale: WO 2006/077346

(56) Documents cités:
- US-A- 5 282 517
- US-A- 6 056 307
- US-B1- 6 244 610

## Description

La présente invention concerne un train arrière pour bicyclette selon le préambule de la revendication 1. Un tel train arrière est décrit dans le document US-A-6056307.

Selon des modes de réalisation connues, des étriers flottants sont montés à rotation autour de l'axe de la roue arrière. L'étrier entoure la piste de freinage du disque, sur le principe de l'étau et c'est le disque qui bouge pour se centrer dans l'étrier.

Dans le document FR 2 762 572, une suspension arrière pour bicyclette est divulguée, caractérisée en ce que différents éléments de cette suspension sont agencées de sorte que le rendement du cadre lors du pédalage est conservée. La motricité de la bicyclette est ainsi optimisée sans les effets de pompage redoutés. Afin d'optimiser également la prestation du cadre lors des freinages, il peut être envisagé de joindre au train arrière, muni d'une telle suspension, un étrier flottant.

Un des objectifs de l'invention est donc de proposer une amélioration d'un train arrière pour offrir à la bicyclette sur laquelle ce train est monté des prestations tout terrain optimales, à la fois en freinage et en pédalage.

En réponse à des contraintes que l'on retrouve invariablement chez les différents industriels, la présente invention se veut également peu coûteuse et peu encombrante.

Pour répondre à ces objectifs, l'invention propose un train arrière pour bicyclette tel que décrit précédemment, **caractérisé en ce que** la distance entre le point d'articulation de la biellette sur le bras inférieur et le point d'articulation du bras inférieur sur le porte moyeu est au moins égale à un tiers de la distance entre le point d'articulation du bras inférieur sur le porte moyeu et le point d'articulation du bras inférieur sur le cadre.

Selon différentes caractéristiques de la présente invention :
- le point d'articulation de la biellette sur le bras inférieur est positionné sensiblement près du cadre de la bicyclette.
- le bras supérieur supporte un dispositif amortisseur.
- les sommets du quadrilatère articulé délimité par le bras inférieur, le porte moyeu, le bras supérieur et le cadre sont agencés de sorte que la droite passant par l'axe de rotation du moyeu de la roue arrière, d'une part, et le centre de courbure de la trajectoire dudit moyeu lors du débattement de la suspension, d'autre part, forme avec une droite horizontale s'étendant parallèlement au plan longitudinal médian de la bicyclette, un angle compris entre 10° et 20°.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'un train arrière de bicyclette selon un mode de réalisation de l'invention.
- la figure 2 est une représentation schématique du train représenté à la figure 1.

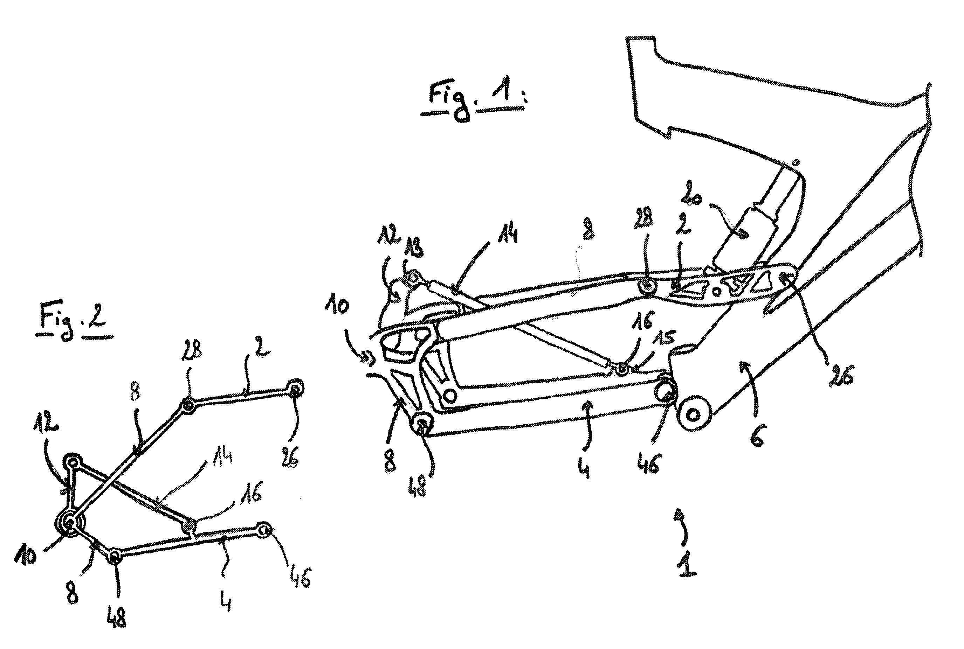

Tel que représenté sur les figures 1 et 2, un train arrière 1 de bicyclette comprend au moins un bras supérieur 2, qui supporte un dispositif amortisseur 20, et un bras inférieur 4, qui présente une forme de fourche apte à se positionner de part et d'autre de la roue arrière du véhicule. Le bras supérieur 2 est articulé sur une partie du cadre 6 de la bicyclette, le point d'articulation correspondant 26 étant situé plus haut sur le cadre que le point d'articulation 46 correspondant à l'articulation du bras inférieur 4 sur le cadre 6. L'autre extrémité 28 du bras supérieur 2 est articulée sur un porte moyeu 8, solidaire en rotation de l'axe 10 de la roue arrière non représentée. De même, l'autre extrémité 48 du bras inférieur 4 est articulée sur ce porte moyeu 8. Ainsi, la roue arrière est reliée au cadre 6 par une structure articulée définissant un quadrilatère. Ce quadrilatère articulé, contenu dans un plan sensiblement médian vertical longitudinal de la bicyclette, comporte les points d'articulation 26, 28, 48, 46, et les côtés 2, 8, 4, 6.

Un support d'étrier de frein 12 est monté à rotation autour de l'axe 10 de la roue arrière non représentée. Une biellette 14 est montée à une première extrémité sur ce support 12 et à une seconde extrémité sur le bras inférieur 4. L'objectif de cet étrier flottant, composé du support d'étrier 12 et de la biellette 14, est de se reprendre sur le bras inférieur 4 pour générer une rotation de l'étrier de frein et ainsi piloter la rotation du porte moyeu 8. Il est ainsi induit des efforts de compression de la suspension arrière, ce qui est recherché lors d'un freinage.

La position du point d'articulation 16 de cette biellette 14 sur le bras inférieur 4 est calculée de sorte que ce point d'articulation 16 est située entre les points d'articulation 46 et 48 du bras inférieur 4 sur respectivement le cadre 6 et le porte moyeu 8. De plus, la distance entre le point d'articulation 16 de la biellette 14 sur le bras inférieur 4 et le point d'articulation 48 entre le porte moyeu 8 et le bras inférieur 4 est au moins égale au tiers de la distance entre les deux points d'articulation 46 et 48 des extrémités du bras inférieur 4. Ce rapport permet d'éviter un positionnement de l'articulation de la biellette 14 trop proche du porte moyeu 8, ce qui reviendrait à rendre quasiment solidaire le support d'étrier 12 du porte moyeu 8.

La biellette 14 s'étend du support d'étrier flottant 12 au bras inférieur 4, et une patte de fixation 13 est formée sur le support 12 pour recevoir l'articulation de l'extrémité de la biellette 14. De même, une patte de fixation 15 est formée sur le bras inférieur 4 pour recevoir la deuxième articulation de l'extrémité de la biellette 14, et ces deux pattes de fixation 13 et 15 sont disposées de sorte que la biellette 14 puisse s'étendre à l'intérieur de la fourche formant le porte moyeu 8, sans entraver la rotation de la roue arrière non représentée.

Tel que vu précédemment, le fait de rapprocher sensiblement du cadre 6 le point d'articulation 16 de la biellette 14 sur le bras inférieur 4 permet d'obtenir une compression de la suspension et du cadre lors d'un freinage. Tel que représenté sur les figures 1 et 2, la biellette 14 est fixée sur le bras inférieur 4. Cette fixation sur le bras inférieur 4 présente l'avantage d'une réalisation simple et peu encombrante.

Cet effet est avantageusement combiné au système de suspension divulgué dans le document FR 2 762 572, afin de combiner les performances lors du pédalage et les performances lors d'un freinage. En effet, le positionnement et la longueur de la biellette 14 sont dimensionnés pour permettre au quadrilatère articulé délimité par le bras inférieur (4), le porte moyeu (8), le bras supérieur (2) et le cadre (6). Ainsi, les sommets (26, 28, 48, 46) de ce quadrilatère articulé sont agencés de sorte que la droite passant par l'axe de rotation du moyeu de la roue arrière, d'une part, et le centre de courbure de la trajectoire dudit moyeu lors du débattement de la suspension, d'autre part, forme avec une droite horizontale s'étendant parallèlement au plan longitudinal médian de la bicyclette, un angle compris entre 10° et 20°.

Avantageusement, cette valeur d'angle, lorsque la suspension de la bicyclette est comprimée sous poids propre du cycliste et de la bicyclette, est comprise entre 11 et 13°. Il sera compris que de telles valeurs sont obtenues après un réglage initial du dispositif amortisseur 20 pour s'adapter au poids du cycliste. Ce réglage est effectué à l'arrêt, lorsque le cycliste est assis sur la selle de la bicyclette.

L'invention n'est nullement limitée au mode de réalisation décrit et illustré qui n'a été donné qu'à titre d'exemple.

## Revendications

1. Train arrière pour bicyclette, comprenant au moins un support d'étrier de frein (12) qui est monté à rotation autour de l'axe (10) de roue arrière et un porte moyeu (8) qui est solidaire de cet axe (10) de roue arrière, et comprenant au moins un bras inférieur (4) qui est articulé à une première extrémité (48) sur un porte moyeu (8) et à une deuxième extrémité (46) au cadre (6) de la bicyclette, un bras supérieur (2) qui s'étend du porte moyeu (8) au cadre (6), et une biellette (14) disposée entre le support d'étrier de frein (12) et le bras inférieur (4), **caractérisé en ce que** la distance entre le point d'articulation (16) de la biellette (14) sur le bras inférieur (4) et le point d'articulation (48) du bras inférieur (4) sur le porte moyeu (8) est au moins égale à un tiers de la distance entre le point d'articulation (48) du bras inférieur (4) sur le porte moyeu (8) et le point d'articulation (46) du bras inférieur (4) sur le cadre (6).

2. Train arrière selon la revendication 1, **caractérisé en ce que** le point d'articulation (16) de la biellette (14) sur le bras inférieur (4) est positionné sensiblement près du cadre (6) de la bicyclette.

3. Train arrière selon l'une des revendications 1 ou 2, **caractérisé en ce que** le bras supérieur (2) supporte un dispositif amortisseur (20).

4. Train arrière selon l'une des revendications précédentes, **caractérisé en ce que** les sommets (26, 28, 48, 46) du quadrilatère articulé délimité par le bras inférieur (4), le porte moyeu (8), le bras supérieur (2) et le cadre (6) sont agencés de sorte que la droite passant par l'axe de rotation du moyeu de la roue arrière, d'une part, et le centre de courbure de la trajectoire dudit moyeu lors du débattement de la suspension, d'autre part, forme avec une droite horizontale s'étendant parallèlement au plan longitudinal médian de la bicyclette, un angle compris entre 10° et 20°.

## Claims

1. Bicycle rear end comprising at least one brake calliper carrier (12) which is mounted such that it can rotate about the rear wheel axle (10) and a hub carrier (8) which is secured to this rear wheel axle (10), and comprising at least one lower link (4) which is articulated at a first end (48) to a hub carrier (8) and at a second end (46) to the frame (6) of the bicycle, an upper link (2) which extends from the hub carrier (8) to the frame (6) and a link rod (14) positioned between the brake calliper carrier (12) and the lower link (4), **characterized in that** the distance between the point (16) at which the link rod (14) is articulated to the lower link (4) and the point (48) at which the lower link (4) is articulated to the hub carrier (8) is at least equal to one third of the distance between the point (48) at which the lower link (4) is articulated to the hub carrier (8) and the point (46) at which the lower link (4) is articulated to the frame (6).

2. Rear end according to Claim 1, **characterized in that** the point (16) at which the link rod (14) is articulated to the lower link (4) is positioned extremely close to the frame (6) of the bicycle.

3. Rear end according to one of Claims 1 and 2, **characterized in that** the upper link (2) supports a shock-absorber device (20).

4. Rear end according to one of the preceding claims, **characterized in that** the vertices (26, 28, 48, 46) of the articulated quadrilateral defined by the lower link (4), the hub carrier (8), the upper link (2) and the frame (6) are arranged in such a way that the straight line passing through the axis of rotation of the rear wheel hub, on the one hand, and the centre of curvature of the path of the said hub during suspension travel, on the other hand, makes, with a horizontal straight line running parallel to the longitudinal midplane of the bicycle, an angle of between 10° and 20°.

## Patentansprüche

1. Hinteres Fahrgestell für ein Fahrrad, das mindestens einen Bremssattelträger (12), der um die Hinterradachse (10) drehend montiert ist, und einen Nabenträger (8) aufweist, der fest mit dieser Hinterradachse (10) verbunden ist, und das mindestens einen unteren Arm (4), der mit einem ersten Ende (48) an einen Nabenträger (8) und mit einem zweiten Ende (46) am Rahmen (6) des Fahrrads angelenkt ist, einen oberen Arm (2), der sich vom Nabenträger (8) zum Rahmen (6) erstreckt, und eine Schubstange (14) aufweist, die zwischen dem Bremssattelträger (12) und dem unteren Arm (4) angeordnet ist, **dadurch gekennzeichnet, dass** der Abstand zwischen dem Anlenkpunkt (16) der Schubstange (14) am unteren Arm (4) und dem Anlenkpunkt (48) des unteren Arms (4) am Nabenträger (8) mindestens gleich einem Drittel des Abstands zwischen dem Anlenkpunkt (48) des unteren Arms (4) am Nabenträger (8) und dem Anlenkpunkt (46) des unteren Arms (4) am Rahmen (6) ist.

2. Hinteres Fahrgestell nach Anspruch 1, **dadurch gekennzeichnet, dass** der Anlenkpunkt (16) der Schubstange (14) am unteren Arm (4) im Wesentlichen nahe dem Rahmen (6) des Fahrrads positioniert ist.

3. Hinteres Fahrgestell nach einem der Ansprüche 1 oder 2, **dadurch gekennzeichnet, dass** der obere Arm (2) die Dämpfungsvorrichtung (20) trägt.

4. Hinteres Fahrgestell nach einem der vorhergehenden Ansprüche, **dadurch gekennzeichnet, dass** die Ecken (26, 28, 48, 46) des angelenkten Vierecks, das vom unteren Arm (4), dem Nabenträger (8), dem oberen Arm (2) und dem Rahmen (6) gebildet wird, so angeordnet sind, dass die Gerade, die durch die Drehachse der Nabe des Hinterrads einerseits und durch das Krümmungszentrum der Bahn der Nabe beim Federweg andererseits verläuft, mit einer waagrechten Geraden, die sich parallel zur mittleren Längsebene des Fahrrads erstreckt, einen Winkel zwischen 10° und 20° bildet.
